# EUROPEAN PATENT APPLICATION

(11) **EP 1 666 245 A1**
(43) Date of publication of application: **07.06.2006**
(21) Application number: 04747000.0
(22) Date of filing: 05.07.2004
(51) Int. Cl.: B32B 27/32, B32B 27/18

(54) **PROCESS FOR PRODUCING LAYERED PACKAGING MATERIAL**

(30) Priority: 09.09.2003 JP 2003316721
(71) Applicant: Tetra Laval Holdings & Finance S.A., 1009 Pully (CH)
(72) Inventor: IKENOYA, Tadakatsu, c/o NIHON TETRA PAK K.K.,, Chiyoda-ku Tokyo 1028544 (JP)
(74) Representative: Müller, Frank Peter
(86) International application number: PCT/JP2004/009531
(87) International publication number: WO 2005/025864

(57) **Abstract**

A process of manufacturing a laminated packing material in which ascorbic acid and the like can bring out the best in functionality and which does not complicate the lamination operation of the laminated packing material and does not impair the lamination properties of the laminated packing material is provided.

[Solution]

The process of manufacturing the laminated packing material is a process of manufacturing a laminated packing material which has a polyolefin thermoplastic resin exterior layer, base material, coating supporting layer and polyolefin thermoplastic resin interior layer and is used for filling and packaging a fluid food, wherein an alcoholic solution of ascorbic acid or ascorbate is mixed with a coating formation solution consisting of a coating formation component and an evaporative coating formation adjuvant element to obtain an ascorbic acid containing coating solution, the ascorbic acid containing coating solution is applied to the surface of the coating supporting layer, and the alcoholic solvent and volatile coating formation adjuvant element are evaporated to form a coating in which small particles of crystalline ascorbic acid or ascorbate are dispersed uniformly.

## Description

### Technical Field

The present invention relates to a process of manufacturing laminated packing materials for producing packaging containers which are filled with fluid products such as milk, juice and the like.

### Background Art

Packaging containers for milk, juice, refined sake, Japanese distilled spirit, mineral water and other drinks are, for example, manufactured in such a way that a web-like packing material is a laminate consisting of a base material, specifically speaking, a fibered base material such as paper and the like and a plastic film such that a crease line is put in the laminate, the packing material is sealed along a vertical line in the direction of the length and is molded to be a tube-like product, a filling material is filled into the packing material which is molded to be the tube-like product, the tube-like packing material is sealed along a crossline in the direction of the crossing, then the resultant packing material is molded to be a product having a cushion-like or bolster-like primary shape. When the packing material is in the form of a belt, it is cut at established intervals to go to pieces and each of the pieces is folded up along its crease line to have its final shape. The final shape includes a brick-like shape, column-like shape, tetrahedron shape or the like. The materials for fibered base materials are often in the form of a thick paper.

Moreover, in a paper packaging container whose roof is in the form of a gable top, a paper packing material is cut to be a piece of paper having a predetermined shape, the piece of paper is sealed in the direction of the length of a container to obtain a blank container, the blank container is sealed at the bottom in a filling machine, then a filling material such as milk, juice or other drinks is filled into the blank container through the top opening thereof and the top opening is sealed to obtain a final product. In these packing materials, the panoramic design of a packaging container product is printed on the surface thereof.

In conventional-type laminated packing materials used for paper packaging container products, low-density polyethylene(LDPE)/printing ink layer/paper or fibered base material layer/LDPE/aluminum foil(Al, gas barrier layer)/LDPE/LDPE, LDPE/printing ink layer/paper base material layer/LDPE/LDPE, printing ink layer/LDPE/paper base material layer/LDPE/LDPE, and LDPE/printing ink layer/paper base material layer/LDPE/Al/polyester(PET) and the like are known, and they are also used for general purpose at present.

In addition to the above-mentioned laminated packing materials, they have always provided means of preventing the oxidation and degradation of food contents or the breeding of germs due to the oxygen which is present within the inside of a packaging body or the oxygen which permeates and infiltrates out of the outside of a packaging body. They are, for example, a technique in which a synthetic resin comprising a mixture of L-ascorbic acid and a primary ferrous ion compound is used as a packing material to remove oxygen (JUM 4-39241, B), a packing material for preventing the thermal degradation of an oxygen absorbent during production and further for preventing the breeding of the oxygen absorbent through having an anchor coat agent layer comprising a mixture of an ascorbic acid derivative and a reaction accelerator or transition metal compound (JP 6-190960, A), a packing material for preventing the thermal hysteresis of an oxygen absorbent during production and further for preventing the breeding of the oxygen absorbent through spreading and adhering a disoxidation agent and/or moisture absorbent onto an anchor coat agent layer on a base material sheet and forming a protective layer to cover the anchor coat agent layer (JUM 60-10768, A) and the like.
Patent document 1: JUM 4-39241, B
Patent document 2: JP 6-190960, A
Patent document 3: JUM 60-10768, A

### Disclosure of the Invention

### Problems to be solved by the Invention

A functionalization material containing an oxygen absorbent such as ascorbic acid and the like is pulverized into small particles and the resultant fine powder material is spread and adhered onto the surface of a supporting base material/supporting sheet, so that the functionality thereof is given thereto more effectively. There have been demands on a process of manufacturing a laminated packing material in which a functional material such as ascorbic acid or the like can bring out the best in functionality. Moreover, there have been needs for a process of manufacturing a laminated packing material without complicating the lamination operation of the laminated packing material due to the formation of the laminated packing material and further without impairing the lamination properties of the laminated packing material.

### Means for solving problems

The process of manufacturing a laminated packing material according to the present invention is a process of manufacturing a laminated packing material which has a polyolefin thermoplastic resin exterior layer, base material, coating supporting layer and polyolefin thermoplastic resin interior layer and is used for filling and packaging a fluid food and is characterized in that an alcoholic solution of ascorbic acid or ascorbate is mixed with a coating formation solution consisting of a coating formation component and an evaporative coating formation adjuvant element to obtain an ascorbic acid containing coating solution, said ascorbic acid containing coating solution is applied to the surface of said coating supporting layer, and said alcoholic solvent and volatile coating formation adjuvant element are evaporated to form a coating in which small particles of crystalline ascorbic acid or ascorbate are dispersed uniformly.

### Effects of the Invention

Owing to a process of manufacturing a laminated packing material according to the present invention, a functionalization material containing ascorbic acid and the like is pulverized into small crystal particles and the resultant fine material is spread and adhered onto the surface of a supporting base material/supporting sheet, so that the functionality thereof is given thereto more effectively. Ascorbic acid and the like can bring the best in functionality. Besides, an additional process of applying an ascorbic acid containing coating solution is added to the lamination operation for a laminated packing material, and an evaporation step in which the evaporation occurs naturally or quasi-naturally is provided, so that a laminated packing material, which is free from the complicated operations thereof and is further free from the damages to the lamination properties thereof, can be obtained.

### Best mode for carrying out the Invention

Hereinafter, embodiments of the present invention will be described in detail.

The process of manufacturing a laminated packing material according to the present invention is a process of manufacturing a laminated packing material which has a polyolefin thermoplastic resin exterior layer, base material, coating supporting layer and polyolefin thermoplastic resin interior layer and is used for filling and packaging a fluid food. The laminated materials for this type of polyolefin thermoplastic resin interior or exterior layers include polyolefin thermoplastic resins such as low-density polyethylene (LDPE), linear low-density polyethylene (LLDPE), polyethylene series resins synthesized using a metallocene catalyst (mLLDPE), high-density polyethylene (HDPE), polypropylene (PP) and the like. The base materials include fibered base materials such as paper, artificial paper, laminated sheets composed almost exclusively of paper and the like, polyamide resins with mechanical strength, base materials consisting of composite materials and the like. Optional gas barrier layers include metallic foils such as aluminum foils having a thickness of from 5 to 10 micrometers and the like, biaxially oriented barrier films such as thin silicic oxide coatings which are formed according to a PCVD method and have a thickness of from 6 to 12 micrometers, EVOH layers, polyamide layers such as nylon 6, nylon MXD6 or the like, and the like.

Coating supporting layers for the laminated packing materials according to the present invention include are any of laminated packing material layers to which a liquid ascorbic acid containing coating solution can be applied and which has a fixed shape. Concretely, for example, the above-mentioned gas barrier layers are illustrated. Polyolefin thermoplastic resin exterior layers, base materials and polyolefin thermoplastic resin interior layers other than these layers are illustrated

The process of manufacturing a laminated packing material according to the present invention includes the following steps:
The step of mixing an alcoholic solution of ascorbic acid or ascorbate with a coating formation solution consisting of a coating formation component and an evaporative coating formation adjuvant element to obtain an ascorbic acid containing coating solution, and
the step of applying said ascorbic acid containing coating solution to the surface of said coating supporting layer and evaporating said alcoholic solvent and volatile coating formation adjuvant element to form a coating in which small particles of crystalline ascorbic acid or ascorbate are dispersed uniformly.

In the process according to the present invention, alcohols which can dissolve ascorbic acid or ascorbate include ethanol, butanol, isopropyl alcohol, cyclohexanol and the like, and ethanol is preferred. The amount of ascorbic acid or ascorbate dissolved in any alcohol is the amount of usage thereof at the time of being able to dissolve the whole amount thereof practically and it is necessary that there is not any piece of undissolved solid component.

In the process according to the present invention, the coating formation component and evaporative coating formation adjuvant element include materials used as general paints. For example, they include coating formation components such as cellulose derivatives such as cellulose nitrate and the like, synthetic resins such as acrylic resins or the like, and the like, and evaporative coating formation adjuvant elements such as alcohols, esters, ketones, ethers, water and the like. Concretely, the coating formation solution includes lacquers and anchor coat agents and the like.

When any anchor coat agent is used as the coating formation solution, it can also be used as an anchor coat agent for combining laminated materials together. Usable anchor coat agents are well known and optional. It is preferred to use any of anchor coat agents which can be diluted with a water-based solvent. Moreover, for example, agents of silicone series, fast setting type urethane series, epoxyamine series can be used as the anchor coat agent for dry laminating treatment. Furthermore, adhesive resins for combining laminated packing materials together comprise ethylene-vinyl acetate copolymers (EVA) and ionomers (lO). The EVA has an adhesive property to metallic foils and can be used as one of the adhesive resins according to an extrusion laminating process and the lO synthetic resins in which molecules of ethylene-vinyl methacrylate copolymers are cross-linked with metallic ions can also be used.

In the process according to the present invention, an ascorbic acid containing coating solution is applied to the surface of the coating supporting layer, and an alcoholic solvent and volatile coating formation adjuvant element are evaporated to form a coating in which small particles of crystalline ascorbic acid or ascorbate are dispersed uniformly. The above-mentioned coating formation step is carried out on condition that it is added to any of steps of the whole process for manufacturing a packing layered product. The alcoholic solvent and volatile coating formation adjuvant element are evaporated easily in a lamination step in which a web-like packing material is conveyed with rollers and the like in a normal atmosphere. Therefore, it is not necessary to lay additional heating devices, blowers and the like, so that the lamination operation is not complicated.

Ascorbic acid or ascorbate is dissolved in an ascorbic acid containing coating solution, or is dispersed uniformly at a molecular level. At the time of lamination, the alcoholic solvent and volatile coating formation adjuvant element are evaporated, so that the ascorbic acid or ascorbate remaining in the resultant coating is crystallized to be small particles and furthermore these particles are dispersed uniformly in the resultant coating. As a result, it is possible to obtain coatings in which small particles of crystalline ascorbic acid or ascorbate are dispersed uniformly. The reason is not exactly clear theoretically, but coatings obtained according to the present invention are more excellent in function as compared with coatings obtained through the process of pulverizing powders of ascorbic acid or ascorbate which are in the form of a solid crystal to small particles, adding the resultant small particles to a coating solution and dispersing them uniformly.

In addition, the ascorbic acid or ascorbate does not damage the intrinsic function of the coating, that is, the adhesive property thereof when an adhesive lacquer or anchor coat agent is used.

Moreover, the present invention is not limited to the above-mentioned embodiments and can be transformed in various ways on the basis of the gist of the present invention, and such various types of transformation are not excluded from the scope of the present invention.

### Industrial applicability

It is possible to produce packaging containers in which fluid products such as milk, juice and the like are filled using laminated packing materials according to the present invention.

## Claims

1. A process of manufacturing a laminated packing material having polyolefin thermoplastic resin exterior layer, base material, coating supporting layer and polyolefin thermoplastic resin interior layer and being used for filling and packaging a fluid food, comprising the steps of:
mixing an alcoholic solution of ascorbic acid or ascorbate with a coating formation solution consisting of a coating formation component and an evaporative coating formation adjuvant element to obtain an ascorbic acid containing coating solution, and:
applying said ascorbic acid containing coating solution to the surface of said coating supporting layer, and evaporating said alcoholic solvent and volatile coating formation adjuvant element to form a coating in which small particles of crystalline ascorbic acid or ascorbate are dispersed uniformly.

2. A process of manufacturing a laminated packing material according to claim 1, wherein said coating supporting layer is any of the component layers of said laminated packing material to which a liquid ascorbic acid containing coating solution can be applied and which has a fixed shape.

3. A process of manufacturing a laminated packing material according to claim 2, wherein the component layers of said laminated packing material include a barrier layer selected from the group consisting of metallic foils, silicic oxide coating barrier films, EVOH layers and polyamide films.

4. A process of manufacturing a laminated packing material according to claim 1, wherein said coating formation component is an adhesive resin.

5. A process of manufacturing a laminated packing material according to claim 1, wherein said coating formation solution is an anchor coat agent.

6. A process of manufacturing a laminated packing material according to claim 1, wherein the alcohol of said alcoholic solution is ethanol.

7. A process of manufacturing a laminated packing material according to claim 1, wherein said base material is selected from the group consisting of paper, artificial paper, laminated sheets composed almost exclusively of paper, polyamide resins and composite materials thereof.
